# EUROPÄISCHE PATENTSCHRIFT

(11) **EP 3 472 390 B1**
(45) Veröffentlichungstag und Bekanntmachung des Hinweises auf die Patenterteilung: **04.05.2022**
(21) Anmeldenummer: 17734235.9
(22) Anmeldetag: 09.06.2017
(51) Int. Cl.: E01C 19/48, B60C 23/00

(54) **STRASSENBAUMASCHINE UND VERFAHREN ZUM BETREIBEN EINER SELBSTFAHRENDEN STRASSENBAUMASCHINE**
ROAD CONSTRUCTION MACHINE AND METHOD FOR OPERATING A SELF-PROPELLED ROAD CONSTRUCTION MACHINE
ENGIN DE CONSTRUCTION ROUTIER ET PROCÉDÉ DE FONCTIONNEMENT D'UN ENGIN DE CONSTRUCTION ROUTIER AUTOMOTEUR

(30) Priorität: 10.06.2016 DE 102016007076
(43) Veröffentlichungstag der Anmeldung: 24.04.2019
(73) Patentinhaber: Dynapac GmbH, 26203 Wardenburg (DE)
(72) Erfinder: SCHWARTING, Thorsten, 26203 Wardenburg (DE); FASCHE, Christian, 27793 Wildeshausen (DE)
(74) Vertreter: Möller, Friedrich
(86) Internationale Anmeldenummer: PCT/EP2017/000672
(87) Internationale Veröffentlichungsnummer: WO 2017/211458

(56) Entgegenhaltungen:
- EP-A1- 2 322 716
- DE-A1- 10 117 583
- DE-A1- 19 513 195
- US-B2- 8 838 347

## Beschreibung

Die Erfindung betrifft ein Verfahren zum Betreiben einer selbstfahrenden Straßenbaumaschine, nämlich eines Straßenfertigers oder eines Beschickers, gemäß dem Oberbegriff des Anspruchs 1. Des Weiteren betrifft die Erfindung eine Straßenbaumaschine, nämlich Straßenfertiger oder Beschicker, gemäß dem Oberbegriff des Anspruchs 10.

Ein derartiger Straßenfertiger ist aus der DE10117583A1, EP2322716A1 oder DE19513195A1 bekannt.

Straßenfertiger und Beschicker dienen zur Herstellung von Straßenbelägen aus Asphalt, aber auch aus anderen Straßenbaumaterialien, z. B. Beton. Das zu verarbeitende Straßenbaumaterial wird von Lastkraftwagen zur Baustelle transportiert und dort entweder direkt in einen Vorratsbehälter des Straßenfertigers oder den Vorratsbehälter des Beschickers gekippt, der es zum Straßenfertiger weiterfördert. Das Straßenbaumaterial wird während der Fortbewegung des selbstfahrenden Straßenfertigers oder Beschickers vom Lastkraftwagen in den Vorratsbehälter des Straßenfertigers oder des Beschickers gekippt. Dabei schiebt der Straßenfertiger oder der Beschicker den Lastkraftwagen vor sich her.

Straßenfertiger und Beschicker weisen für den Einbaubetrieb, aber auch für den Transport bzw. für kurze Straßenfahrten, ein Fahrwerk auf. Dieses Fahrwerk kann als Radfahrwerk oder als Raupenfahrwerk ausgebildet sein. Das Radfahrwerk eines Straßenfertigers weist in der Regel sowohl Luftreifen als auch Vollgummiräder auf. Die luftgefüllten Reifen sind in der Regel als Antriebsräder in Fertigungsrichtung des Straßenfertigers am hinteren Ende des Fertigers positioniert. Die Vollgummiräder können ebenfalls als Antriebsräder ausgebildet sein und befinden sich in Fertigungsrichtung gesehen vor den Antriebsreifen. Beschicker können ebenfalls luftgefüllte Reifen aufweisen, die durch eine Antriebseinheit, wie beispielsweise einem Dieselaggregat, angetrieben werden.

Für den Einbauprozess des Straßenbaumaterials wird eine Einbaubohle des Straßenfertigers auf den herzustellenden Straßenbelag bzw. auf das Straßenbaumaterial abgelassen und in Fertigungsrichtung über das Material gezogen, sodass sich dieses verfestigt. Dabei liegt die Einbaubohle in der Regel schwimmend auf dem Straßenbaumaterial auf. Damit sich der Straßenfertiger, aber auch der Beschicker, während des Herstellungsprozesses des Straßenbelags gleichmäßig auf dem Untergrund, auf dem der Straßenbelag aufgetragen werden soll, bewegen kann, ist eine ausreichende Traktion der Antriebsreifen bzw. Räder notwendig, d. h. der Schlupf des Fahrwerkes ist möglichst gering zu halten. Schon der geringste Schlupf der Reifen kann zu ungewollten Unebenheiten im Straßenbelag führen, die sich nachteilig auf die Oberflächenbeschaffenheit des herzustellenden Straßenbelags auswirken. Daher wird vor Beginn des Herstellungsprozesses der Reifenluftdruck der Antriebsreifen verringert, sodass sich die Auflageflächen der Reifen auf dem Untergrund erhöhen und somit die Traktion vergrößert wird. Für eine anschließende Straßenfahrt bzw. für den Transport des Straßenfertigers bzw. des Beschickers ist ein geringer Reifenluftdruck jedoch nachteilig, da dadurch die Fahrstabilität bzw. der Fahrkomfort verringert wird sowie der Kraftstoffverbrauch sehr hoch ist. Nach Beendigung des Einbauprozesses wird der Luftdruck der Reifen daher wieder erhöht.

Gleiche Änderungen des Reifenluftdruckes sind notwendig bei sich änderndem Untergrund. So ist beispielsweise die Traktion der Reifen bei gebundenem Sand oder Schotter verschieden. Damit auch hier eine ausreichende Traktion gegeben ist, muss der Luftdruck der Reifen entsprechend angepasst werden.

Da die Anpassung des Reifenluftdruckes an die Einbaubedingungen und/oder an die Betriebsart der Straßenbaumaschine manuell durch eine Bedienperson erfolgt, gestaltet sich der Einbauprozess als besonders zeitaufwendig und kostenintensiv.

Der Erfindung liegt die Aufgabe zugrunde, ein Verfahren zum Betreiben einer selbstfahrenden Straßenbaumaschine sowie eine Straßenbaumaschine zu schaffen, mit der eine Anpassung der Traktion des Fahrwerkes auf eine schnelle und einfache Weise durchführbar ist.

Ein Verfahren zur Lösung dieser Aufgabe weist die Maßnahmen des Anspruchs 1 auf.

Demnach ist es vorgesehen, dass die Traktion der Reifen des Fahrwerkes in Abhängigkeit von der Betriebsart des Straßenfertigers oder des Beschickers kontrolliert und aktiv geregelt wird, wobei die Kontrolle und die aktive Regelung der Traktion während des Betriebs des Straßenfertigers oder des Beschickers für jeden Reifen unabhängig voneinander automatisch oder manuell vorgenommen werden.

Durch diese Kontrolle der Traktion der angetriebenen Reifen kann für jede Betriebsart des Straßenfertigers oder des Beschickers die optimal geeignete Traktion eingeregelt werden.

Durch diese aktive Regelung kann somit während der Einbauphase des Straßenbaumaterials die notwendige hohe Traktion der Reifen gewährleistet werden und/oder während einer Straßenfahrt des Straßenfertigers oder des Beschickers die Traktion derart geregelt werden, dass der Kraftstoffverbrauch und der Reifenverschleiß minimal sind. Insbesondere kann es vorgesehen sein, dass die Kontrolle und die aktive Regelung der

Traktion während des Betriebes des Straßenfertigers oder des Beschickers jeden in Fertigungsrichtung betrachtet hinteren Reifen unabhängig voneinander automatisch oder manuell vorgenommen werden.

Auf Baustellen bzw. Untergründen, auf denen das Straßenbaumaterial aufgebracht wird, kann es vorkommen, dass die angetriebenen Reifen, insbesondere ein linker und ein rechter Reifen, bedingt durch einen beispielsweise sandigen Untergrund verschiedene Traktionen bzw. einen unterschiedlichen Schlupf aufweisen. In diesem Fall kann jeder Reifen einzeln und unabhängig von den anderen Reifen angesteuert und angetrieben werden. Durch die aktive Traktions- bzw. Schlupfkontrolle für jeden einzelnen Antriebsreifen kann eine optimale Traktion des Straßenfertigers oder des Beschickers während des Betriebes erreicht werden. Diese Kontrolle kann entweder vollautomatisch durch eine Steuereinrichtung oder eine Kontrolleinheit durchgeführt werden oder händisch von einer Bedienperson des Straßenfertigers oder des Beschickers.

Bevorzugt kann es die vorliegende Erfindung weiter vorsehen, dass die aktive Regelung der Traktion der Reifen gegenüber Veränderungen des Reifenluftdruckes erfolgt, insbesondere, dass während einer Straßenfahrt oder eines Transportes der Reifenluftdruck erhöht wird und während eines Einbauprozesses des Straßenbelags der Reifenluftdruck verringert wird. Durch Verringerung des Reifenluftdrucks der angetriebenen Reifen bzw. der Hinterreifen wird die Auflagefläche der Reifen auf dem Untergrund erhöht, wodurch der Reibwiderstand und somit die Traktion der Reifen erhöht wird. Diese Regelung kann für jeden einzelnen Reifen individuell und unabhängig von dem anderen durchgeführt werden. Dadurch der Straßenfertiger oder der Beschicker während der Einbauphase des Straßenbaumaterials eine genügend starke Traktion bzw. ist der Reifenluftdruck so weit zu reduzieren, bis eine ausreichende Traktion gegeben ist. Dabei ist stets der optimale Wert für den Reifenluftdruck zu ermitteln, der bei einer optimalen Traktion einen minimalen Treibstoffverbrauch erreicht. Für die Straßenfahrt bzw. den Transport des Straßenfertigers bzw. des Beschickers wird der Reifenluftdruck sodann wieder erhöht, um die Auflagefläche der Reifen auf dem Untergrund zu reduzieren und den Kraftstoffverbrauch zu verringern.

Ein weiteres besonderes Ausführungsbeispiel der vorliegenden Erfindung kann es vorsehen, dass die aktive Regelung der Traktion der Reifen über eine Veränderung der Bohlenentlastung einer Einbaubohle des Straßenfertigers erfolgt, vorzugsweise dass für eine Erhöhung der Traktion die Entlastung der Einbaubohle erhöht wird, d. h. die Einbaubohle wird wenigstens leicht angehoben, wodurch sich die Last auf die Reifen erhöht. Für die Herstellung des Straßenbelags wird das Straßenbaumaterial von einem Vorratsbehälter des Straßenfertigers durch einen Förderer vor eine Verteilerschnecke befördert. Diese Verteilerschnecke verteilt das noch warme Straßenbaumaterial über die gesamte Breite des einzubauenden Straßenbelags. Sodann wird die Einbaubohle über das noch warme Straßenbaumaterial gezogen. Dabei ist die Einbaubohle über sogenannte Tragarme mit dem Straßenfertiger verbunden. In der Regel bewegt sich die Einbaubohle während eines Einbauprozesses in einer schwimmenden Art und Weise über den Straßenbelag. Für eine gewisse Entlastung der Einbaubohle können die Tragarme durch entsprechende Hubzylinder derart bewegt werden, dass die Einbaubohle nicht mit ihrem gesamten Gewicht auf dem Straßenbaumaterial liegt. Um nun die Traktion der Antriebsreifen des Straßenfertigers zu erhöhen, kann die Einbaubohle gerade soweit entlastet werden, dass die notwendige Traktion gegeben ist. Durch diese Regelung der Traktion über Veränderung der Bohlenentlastung wird neben der Variation des Reifenluftdruckes eine weitere Möglichkeit geschaffen, die Traktion der Straßenbaumaschine zu regeln.

Weiter kann es die vorliegende Erfindung vorsehen, dass die aktive Regelung der Traktion der Reifen über eine Veränderung der Bohlenentlastung und über Veränderung des Reifenluftdruckes vorgenommen wird, insbesondere dass die Regelung der Traktion über die Bohlenentlastung zusätzlich zu einer Veränderung des Reifenluftdruckes erfolgen kann. Somit kann es vorteilhaft sein, zunächst die Traktion über die Veränderung des Reifenluftdruckes zu optimieren, um sodann, wenn dies noch nicht zu einem befriedigendem Ergebnis führt, über die Bohlenentlastung die Traktion der Straßenbaumaschine weiter zu optimieren.

Bevorzugt kann es außerdem vorgesehen sein, dass für die Kontrolle und die aktive Regelung des Reifenluftdruckes für alle Reifen während des Betriebes des Straßenfertigers oder des Beschickers der Reifenluftdruck durch eine Reifendruckkontrolleinheit, vorzugsweise permanent bestimmt wird, insbesondere dass durch die Reifendruckkontrolleinheit ein Reifendruckluftverlust der Reifen festgestellt wird. Diese Reifendruckkontrolleinheit kann sich entweder innerhalb der Reifen befinden oder außerhalb. Insbesondere durch die kontinuierliche bzw. permanente Kontrolle des Reifenluftdruckes kann auch ein Reifendruckluftverlust durch beispielsweise eine Beschädigung des Reifens festgestellt werden. Allerdings dient die Reifendruckkontrolleinheit primär dazu, den Ist-Reifendruck festzustellen, um darüber eine eventuell notwendige Änderung des Druckes für eine optimale Traktion des Fahrwerkes zu erzeugen. Entweder wird der Reifenluftdruck, welcher durch die Reifendruckkontrolleinheit gemessen wird, direkt in Abhängigkeit von der durch die Traktionskontrolle gemessenen Traktion optimiert oder über eine Referenzwerttabelle, in der für vorgegebene Reifenluftdrücke vorbestimmte Traktionswerte vorgegeben sind. Dadurch lässt sich ein zu hoher sowie ein zu niedriger relativer Reifenluftdruck verhindern, welcher einen zu hohen Kraftstoffverbrauch und eine mangelhafte Fahrstabilität bzw. einen ungenügenden Fahrkomfort bedingen würde. Außerdem lässt sich durch diese Maßnahme der Kraftstoffverbrauch verringern.

Durch diesen ständigen Feedback-Loop oder Regelkreis bzw. Rückkopplung kann ein häufig durchzuführendes manuelles Befüllen und Entlüften der luftgefüllten Reifen vermieden werden, indem es automatisiert wird. Das hat insbesondere den Vorteil, dass der Einbauprozess des Straßenbaumaterials kostengünstiger und schneller erfolgen kann. Darüber hinaus können durch die optimale Traktion größere Arbeitsbreiten bzw. Einbaustärken der Straßenbaumaschine realisiert werden. Vielmehr sieht es die Erfindung auch vor, die Traktion in Abhängigkeit von der Schichtdicke und/oder der Arbeitsbreite zu regeln bzw. zu optimieren. Die Schichtdicke und/oder die Arbeitsbreite sind direkt durch Sensoren und direkt aus der Steuereinheit bestimmbar. Außerdem kann durch dieses Verfahren eine einfache und prozesssichere Anpassung des Reifenluftdruckes an verschiedene Untergründe wie beispielsweise gebundenen Sand, Schotter, Asphalt oder dergleichen erfolgen.

Durch die ständige Kontrolle des Reifenluftdruckes erfolgen darüber hinaus ein zu jeder Zeit sicherer Betriebszustand der Reifen sowie eine frühzeitige Erkennung von Reifenschäden. Diese gesicherte Mobilität der Straßenbaumaschine ist für einen störungsfreien Herstellungsprozess des Straßenbelags essenziell.

Darüber hinaus kann es vorgesehen sein, dass die Traktion der Reifen des Fahrwerks in Abhängigkeit vom Untergrund, auf dem das Straßenbaumaterial eingebaut wird, und/oder von der Schichtdicke des Straßenbaumaterials und/oder der Einbaubreite des Straßenbaumaterials kontrolliert und aktiv geregelt wird. Bei größerer Einbaubreite bedarf es eine erhöhte Traktion, um das Straßenbaumaterial durch die Einbaubohle gleichmäßig und in einem genügenden Maße zu verdichten. Durch eine größerer Einbaubreite erhöht sich außerdem die Auflagefläche der Einbaubohle auf dem Straßenbaumaterial und somit der Reibwiderstand der Bohle auf dem Material, der für den Einbau des Belages überwunden werden muss.

Insbesondere kann es vorgesehen sein, dass bei einem sich ändernden, insbesondere verringernden, Reifenluftdruck und/oder bei einer veränderten, insbesondere verringerten, Bohlenentlastung die Geschwindigkeit des Straßenfertigers oder des Beschickers, vorzugsweise automatisch, verändert, insbesondere verringert, wird. Durch diese Verbindung der aktiven Kontrolle des Reifenluftdruckes mit einer Steuereinheit der Straßenbaumaschine zum Zwecke der proaktiven Geschwindigkeitsregulierung und/oder dem Zwecke der Traktionserhöhung kann ein optimales Einbauergebnis des Straßenbaumaterials erreicht werden. Je nachdem wie stark die Traktion ist bzw. der Reifenluftdruck oder die Bohlenentlastung, wird die Geschwindigkeit der Straßenbaumaschine entsprechend angepasst.

Des Weiteren kann es vorgesehen sein, dass bei einem Reifenwechsel, insbesondere bei einem Wechsel des Reifenfabrikates, Referenzwerte des Reifenluftdruckes für die Kontrolle und die Regelung der Traktion neu kalibriert werden. Da sich insbesondere die Verformbarkeit der Reifen von Fabrikat zu Fabrikat unterscheiden kann, ist dies bei einem Reifenwechsel, insbesondere bei einem Fabrikatswechsel, notwendig. Durch diese Neukalibrierung, die insbesondere automatisch durchgeführt werden kann, kann die Traktionskontrolle auch nach einem derartigen Wechsel gewohnt zuverlässig erfolgen.

Bevorzugt kann es die vorliegende Erfindung weiter vorsehen, dass die aktive Regelung der Traktion der Reifen über zusätzliche Gewichte oder durch mehrteilige Scheibenräder oder durch Luftbefüllung von Reifen, die mindestens zwei getrennte Luftkammern aufweisen, durchgeführt wird. Insbesondere durch die mehrteiligen Scheibenräder lassen sich Reifen oder Räder besonders schnell und einfach wechseln, was für einen möglichst störungsfreien Einbauprozess des Straßenbaumaterials wichtig ist.

Eine Straßenbaumaschine zur Lösung der eingangs genannten Aufgabe weist die Merkmale des Anspruchs 10 auf. Demnach ist es vorgesehen, dass die Straßenbaumaschine, nämlich ein Straßenfertiger oder ein Beschicker, eine automatische oder manuell betätigbare Traktionssteuereinrichtung zur aktiven Traktionskontrolle der Reifen mit einer Reifendruckkontrolleinheit aufweist. Die Traktion der angetriebenen Reifen ist dabei während des Betriebes der Betriebsart entsprechend durch eine Messung des Reifendruckes anpassbar. Durch diese Traktionssteuereinrichtung, welche der aktiven Traktionskontrolle dient, kann eine schnelle und zuverlässige Änderung der Traktion der Reifen während des Betriebes und in Abhängigkeit der Betriebsart erfolgen.

Des Weiteren kann es vorgesehen sein, dass die Traktionssteuereinrichtung mindestens einen Kompressor aufweist, mit dem ein Luftkessel mit Druckluft befüllbar ist, einen Kesseldruckschalter, ein Kesseldruckmanometer sowie ein Vorwahldruckmanometer, zum Regeln des Luftdruckes, eine Vorwahleinheit, eine Reifendruckkontrolleinheit und eine Regeleinheit sowie Anschlussstellen für die Druckluft an den Reifen. Der Kompressor der Traktionskontrolle kann neben der hier beschriebenen Verwendung für die Regelung des Reifenluftdruckes auch zur Versorgung von anderen Druckluftwerkzeugen genutzt werden. Darüber hinaus kann der Kompressor genutzt werden zur Reinigung von Maschinen, Geräten sowie der Baustelle. Der Kompressor kann außerdem genutzt werden zum Betreiben eines Bohrgerätes zur Probenentnahme (Bohrkerne). Dabei muss der Kompressor nicht fest mit der Straßenbaumaschine verbunden sein. Vielmehr kann er auch als mobiler Kompressor ausgebildet sein, der auch losgelöst von der Straßenbaumaschine zum Einsatzort gebracht werden kann. Der Kompressor kann außerdem als mobile Kompressoreinheit als Nachrüsteinheit zugeordnet werden. Durch die Verwendung der automatischen bzw. manuell betätigbaren Traktionssteuereinrichtung kann die minimale bzw. maximale Einbaustärke optimiert verringert oder erhöht werden. Durch die Gewährleistung eines optimalen Reifenluftdruckes für eine ausreichende Traktion und dies abgestimmt für beide Antriebsreifen kann eine erhöhte Prozesssicherheit des Einbauprozesses erreicht werden. Durch die permanente Überwachung des Reifenluftdruckes kann ein Ausfall der Straßenbaumaschine aufgrund eines schleichenden Reifenschadens vermieden werden. Außerdem lässt sich durch Regelung des Reifenluftdruckes die Durchfahrthöhe bzw. Transporthöhe für Fahrten unter Brücken bzw. durch Tunnel oder derartigen Gebäuden regeln. Des Weiteren lässt sich dadurch der Auffahrwinkel sowie die Einschütthöhe des Vorratsbehälters anpassen bzw. vergrößern oder verringern. Die Erfindung kann es weiter vorsehen, dass der Kompressor hydraulisch, elektrisch oder mechanisch antreibbar ist oder einen eigenen Antrieb aufweist. Dazu kann der Kompressor beispielsweise einen Verbrennungsmotor aufweisen.

Bei einer bevorzugten Weiterbildung der vorliegenden Erfindung kann es außerdem vorgesehen sein, dass die Traktionssteuereinrichtung mindestens einen Sensor zur Ermittlung der Betriebsart und/oder einen Sensor, vorzugsweise einen Sensor für jeden Reifen zur Ermittlung der Traktion, insbesondere des Schlupfes, aufweist. Durch diese Kontrolle der Betriebsart und der Ist-Traktion kann eben diese optimal den äußeren Umständen entsprechend angepasst werden.

Außerdem kann ein weiteres bevorzugtes Ausführungsbeispiel der vorliegenden Erfindung vorsehen, dass die Traktion der Reifen über die Traktionssteuereinrichtung durch Veränderung einer Bohlenentlastung einer Einbaubohle regelbar ist. Diese Regelung der Traktion über Veränderung der Bohlenentlastung schafft eine Alternative zu der Traktionskontrolle basierend auf der Reifendruckregelung.

Ein zusätzliches weiteres Ausführungsbeispiel kann es vorsehen, dass die Traktionssteuereinrichtung und/oder der Kompressor permanent mit den Reifen, insbesondere mit der Reifeninnen- oder außenseite oder der Radnabe, verbunden sind oder dass die Traktionssteuereinrichtung und/oder der Kompressor nicht permanent mit den Reifen verbunden sind. Insbesondere eine Verbindung der Luftdruckleitung mit den Reifen über die Radnabe gestaltet sich als besonders vorteilhaft, da darüber auch während des Betriebes der Reifenluftdruck erhöht bzw. verringert werden kann. Durch diese permanente Verbindung des Kompressors bzw. der Traktionssteuereinrichtung mit den Reifen kann eine fortwährende Kontrolle und Regelung der Traktion erreicht werden, was wiederum zu einem störungsfreien Einbau des Straßenbelags führt.

Ein weiteres Ausführungsbeispiel kann es vorsehen, dass die Reifen zur Traktionskontrolle Gewichte aufweisen oder dass die Reifen aus einem mehrteiligen Scheibenrad, bestehend aus mindestens einer Radschüssel und einem äußeren Felgenring, aufgebaut sind oder dass die Reifen jeweils zwei getrennte Luftkammern aufweisen. Insbesondere der Aufbau der Reifen aus einem mehrteiligen Scheibenrad gewährleistet während des Betriebes der Straßenbaumaschine einen schnellen Reifenwechsel, ohne lange Standzeit. Des Weiteren lässt sich über die Zusatzgewichte bzw. die getrennten Luftkammern der Reifen die Traktion der Reifen besonders genau einregeln.

Ein bevorzugtes Ausführungsbeispiel einer Straßenbaumaschine gemäß der Erfindung wird nachfolgend anhand der Zeichnung näher erläutert. In dieser zeigen:
- Fig. 1: eine schematische Seitenansicht einer Baumaschine, nämlich eines Straßenfertigers, und
- Fig. 2: ein Blockschaltbild einer Traktionssteuereinrichtung.

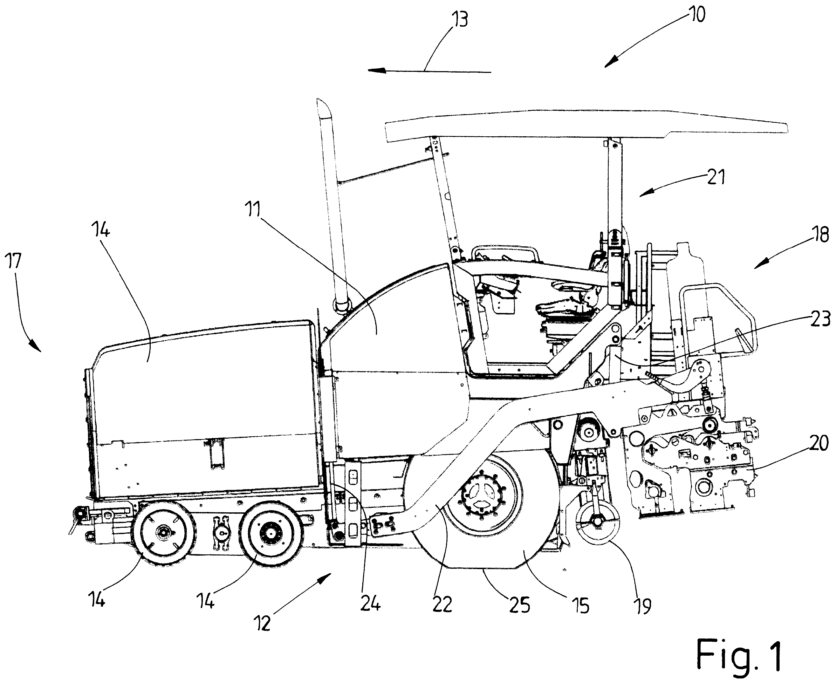

Ein in Fig. 1 schematisch dargestellter Straßenfertiger 10 dient zur Herstellung von Straßenbelägen. Dabei kann es sich um Straßenbeläge jeder Art handeln.

Der Straßenfertiger 10 ist selbstfahrend ausgebildet. Dazu verfügt er über eine zentrale Antriebseinheit 11, die beispielsweise durch einen Verbrennungsmotor gebildet wird, der Hydraulikpumpen zur Versorgung für Hydraulikmotoren und ggf. einen Generator zur Erzeugung von Energie für elektrische Antriebe und Kompressoren aufweist.

Der Straßenfertiger 10 weist ein Fahrwerk 12 auf, welches im gezeigten Ausführungsbeispiel der Fig. 1 als Radfahrwerk ausgebildet ist. Das Fahrwerk 12 wird von der Antriebseinheit 11 derart angetrieben, dass der Straßenfertiger 10 in Fertigungsrichtung 13 vorwärts bewegbar ist. Das Fahrwerk 12 weist an einem in Fertigungsrichtung 13 betrachteten vorderen Teil des Straßenfertiger 10 Räder 14 auf, die bei dem hier dargestellten Ausführungsbeispiel als Vollgummiräder ausgebildet sind. Dem in Fertigungsrichtung 13 betrachtet hinteren Teil des Straßenfertigers 10 ist ein Paar Reifen 15 zugeordnet. Diese Reifen 15 dienen als Antriebsreifen und sind luftgefüllt.

In Fertigungsrichtung 13 gesehen ist vor der Antriebseinheit 11 ein wannen- bzw. muldenartig ausgebildeter Vorratsbehälter 16 angeordnet. Der Vorratsbehälter 16 nimmt einen Vorrat des zur Herstellung des Straßenbelags dienenden Materials, beispielsweise Asphalt, auf. Gegebenenfalls können auch mehrere Vorratsbehälter vorgesehen sein. Das Straßenbaumaterial kann entweder durch einen an das vordere Ende 17 des Straßenfertigers heranfahrenden nicht dargestellten LKW in den Vorratsbehälter 16 geschüttet werden. Es ist jedoch auch denkbar, dass das Straßenbaumaterial über einen nicht dargestellten Beschicker, der ebenfalls an dem vorderen Ende 17 des Straßenfertigers 10 angeordnet ist in den Vorratsbehälter 16 geschüttet wird.

Durch nicht gezeigte Förderorgane wird das Straßenbaumaterial vom Vorratsbehälter 16 unter der Antriebseinheit 11 hindurch zum in Fertigungsrichtung 13 hinteren Ende 18 des Straßenfertigers 10 transportiert. Von einer hinter dem Fahrwerk 12 angeordneten Verteilerschnecke 19 wird das Straßenbaumaterial über die gesamte Arbeitsbreite des Straßenfertigers 10 verteilt. Dabei gelangt ein Vorrat des Straßenbaumaterials vor eine hinter der Verteilerschnecke 19 auf- und abbewegbare, am Fahrwerk 12 angehängte Einbaubohle 20.

Außerdem weist der in Fig. 1 dargestellte Straßenfertiger 10 einen Bedienstand 21 auf, von dem der Straßenfertiger 10 durch eine nicht dargestellte Bedienperson steuerbar ist.

Zur Herstellung des Straßenbelags wird das noch heiße Straßenbaumaterial durch die Verteilerschnecke 19 vor der Einbaubohle 20 abgelegt und von der Einbaubohle 20 verdichtet. Dazu wird die an Tragarmen 22 hängende Einbaubohle 20 auf dem Straßenbaumaterial abgesetzt und von dem Straßenfertiger 10 über das Material gezogen. Die Tragarme 20 werden dabei von Hubzylindern 23 und Nivellierzylindern 24 auf- und abbewegt. Während des Einbauens des Straßenbaumaterials schwimmt die Einbaubohle 20 auf dem Straßenbaumaterial. Für eine Entlastung der Einbaubohle 20 können die Tragarme 22 bzw. die Einbaubohle 20 über die Hubzylinder 23 bzw. Nivellierzylinder 24 angehoben werden.

Für einen gleichmäßigen Einbau des Straßenbelags und somit für die Herstellung eines störungsfreien Belages ist es wesentlich, dass die Reifen 15 eine ausreichende Traktion auf dem Untergrund 25 aufweisen.

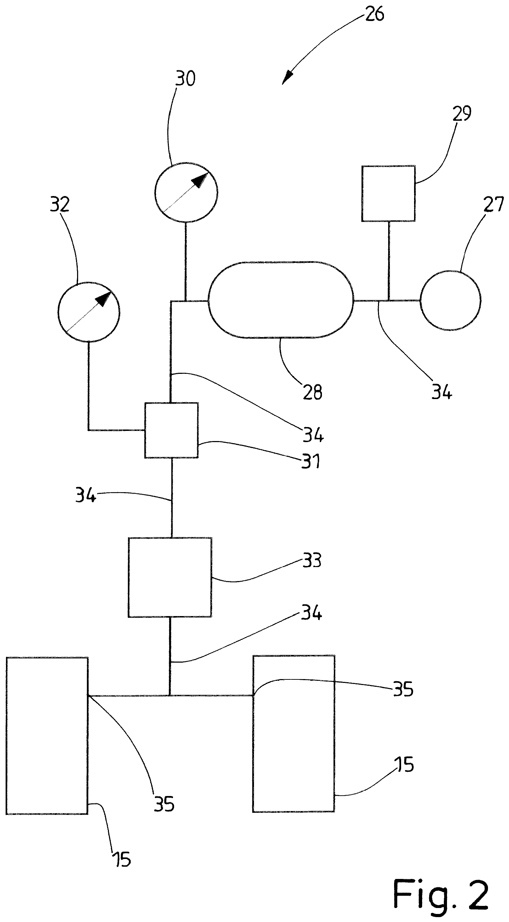

In der Fig. 2 ist stark schematisiert ein Blockschaltbild einer Traktionssteuereinrichtung 26 dargestellt. Diese in Fig. 2 dargestellte Traktionssteuereinrichtung 26 steht in direkter Verbindung mit den beiden Antriebsreifen 15. Es ist erfindungsgemäß jedoch genauso vorgesehen, dass die Traktionssteuereinrichtung 26 die Bohlenentlastung der Einbaubohle 20 regelt. Dazu steuert die Traktionssteuereinrichtung 26 die Hubzylinder 23 bzw. die Nivellierzylinder 24 an.

Die in Fig. 2 dargestellte Traktionssteuereinrichtung 26 weist einen Kompressor 27 auf. Dieser Kompressor erzeugt Druckluft und wird entweder durch einen eigenen Antrieb oder durch die Antriebseinheit 11 bzw. Hilfsaggregate angetrieben. Dem Kompressor 27 ist ein Luftkessel 28 zugeordnet, in dem Druckluft gespeichert werden kann. Um stets eine ausreichende Menge an Druckluft in dem Kessel 28 zu speichern, ist dem Luftkessel 28 ein Kesseldruckschalter 29 und ein Kesseldruckmanometer 30 zugeordnet. Außerdem weist die Traktionssteuereinrichtung 26 eine Vorwahleinheit 31 mit einem Vorwahldruckmanometer 32 sowie eine Regeleinheit 33 auf. Um die Reifen 15 entsprechend ansteuern zu können, führt von dem Kompressor 27 eine Druckluftleitung 34 zu den Reifen 15. Diese Druckluftleitung 34 ist über Anschlussstellen 35 mit den Reifen 15 verbunden. Bei diesen Anschlussstellen 35 kann es sich beispielsweise um die Radnabe der Reifen 15 handeln.

Des Weiteren sind die Reifen 15 wenigstens mit der Regeleinheit 33 durch nicht dargestellte Drucksensormittel verbunden. Diese Sensormittel ermitteln kontinuierlich oder taktweise oder nach einer manuellen Eingabe den Druck in beiden Reifen 15 und übertragen diesen Wert an die Regeleinheit 33. Sodann wird in Abhängigkeit von der vorbestimmten Betriebsart der Luftdruck in den Reifen 15 geregelt. Dazu kann der Reifenluftdruck mittels Luft aus dem Luftkessel 28 bzw. dem Kompressor 27 erhöht werden oder durch Entlüften bzw. Abluft der Druckluft der Druck in den Reifen 15 reduziert werden. Außerdem ist die Regeleinheit 33 direkt mit einer Traktionsmesseinrichtung für beide Reifen 15 verbunden. Sobald diese Traktionsmesseinrichtung eine mangelnde Traktion feststellt, wird der Reifenluftdruck entsprechend geändert. Der Reifenluftdruck wird solange geändert, bis die Traktion optimal ist, und gleichzeitig ein minimaler Verbrauch für die Antriebseinheit 11 erreicht wird.

Neben der Traktionskontrolle und Regelung der Reifen 15 über den Reifenluftdruck kann die Traktionsregelung auch durch Variation der Bohlenentlastung der Einbaubohle 20 erfolgen. Dazu übermittelt die Regeleinheit 33 bei einer festgestellten mangelnden Traktion ein entsprechendes Signal an die Hubzylinder 23 bzw. an die Nivellierzylinder 24. Die Regeleinheit 33 ermittelt dazu eine optimale Verknüpfung der Traktionsregelung durch Veränderung des Reifenluftdrucks und der Bohlenentlastung.

Gleichermaßen wird die Traktion für einen Beschicker geregelt, indem der Reifenluftdruck der antreibbaren Reifen gemessen wird und entsprechend des Betriebsmodus bzw. der gemessenen und notwendigen Traktion der Reifenluftdruck der Antriebsreifen geregelt bzw. erhöht oder verringert wird.

### Bezugszeichenliste:

- 10: Straßenfertiger
- 11: Antriebseinheit
- 12: Fahrwerk
- 13: Fertigungsrichtung
- 14: Rad
- 15: Reifen
- 16: Vorratsbehälter
- 17: vorderes Ende
- 18: hinteres Ende
- 19: Verteilerschnecke
- 20: Einbaubohle
- 21: Bedienstand
- 22: Tragarm
- 23: Hubzylinder
- 24: Nivellierzylinder
- 25: Untergrund
- 26: Traktionssteuereinrichtung
- 27: Kompressor
- 28: Luftkessel
- 29: Kesseldruckschalter
- 30: Kesseldruckmanometer
- 31: Vorwahleinheit
- 32: Vorwahldruckmanometer
- 33: Regeleinheit
- 34: Druckluftleitung
- 35: Anschlussstelle

## Patentansprüche

1. Verfahren zum Betreiben einer selbstfahrenden Straßenbaumaschine, nämlich eines Straßenfertigers (10) oder eines Beschickers, zur Herstellung eines Straßenbelags mit einem angetriebene Reifen (15) aufweisenden Fahrwerk (12), **dadurch gekennzeichnet, dass** die Traktion der Reifen (15) des Fahrwerkes (12) in Abhängigkeit von der Betriebsart des Straßenfertigers (10) oder des Beschickers kontrolliert und aktiv geregelt wird, wobei die Kontrolle und die aktive Regelung der Traktion während des Betriebs des Straßenfertigers (10) oder des Beschickers für jeden Reifen (15) unabhängig voneinander automatisch oder manuell vorgenommen werden.

2. Verfahren nach Anspruch 1, **dadurch gekennzeichnet, dass** die Kontrolle und die aktive Regelung der Traktion während des Betriebs des Straßenfertigers (10) oder des Beschickers für jeden in Fertigungsrichtung (13) betrachtet hinteren Reifen (15) unabhängig voneinander automatisch oder manuell vorgenommen werden.

3. Verfahren nach Anspruch 1 oder 2, **dadurch gekennzeichnet, dass** die aktive Regelung der Traktion der Reifen (15) über Veränderung des Reifenluftdruckes erfolgt, insbesondere, dass während einer Straßenfahrt oder eines Transports der Reifenluftdruck erhöht wird und während eines Einbauprozesses des Straßenbelags der Reifenluftdruck verringert wird.

4. Verfahren nach einem der vorhergehenden Ansprüche, **dadurch gekennzeichnet, dass** die aktive Regelung der Traktion der Reifen (15) über eine Veränderung der Bohlenentlastung einer Einbaubohle (20) des Straßenfertigers (10) erfolgt, vorzugsweise dass für eine Erhöhung der Traktion die Entlastung der Einbaubohle (20) erhöht wird.

5. Verfahren nach einem der vorhergehenden Ansprüche, **dadurch gekennzeichnet, dass** die aktive Regelung der Traktion der Reifen (15) über eine Veränderung der Bohlenentlastung und über Veränderung des Reifenluftdruckes vorgenommen wird, insbesondere dass die Regelung der Traktion über die Bohlenentlastung zusätzlich zu einer Veränderung des Reifenluftdruckes erfolgen kann.

6. Verfahren nach einem der vorhergehenden Ansprüche, **dadurch gekennzeichnet, dass** für die Kontrolle und die aktive Regelung des Reifenluftdrucks aller Reifen (15) während des Betriebs des Straßenfertigers (10) oder des Beschickers der Reifenluftdruck durch eine Reifendruckkontrolleinheit, vorzugsweise permanent, bestimmt wird, insbesondere dass durch die Reifendruckkontrolleinheit ein Luftdruckverlust der Reifen (15) festgestellt wird, wobei die Traktion der Reifen (15) des Fahrwerks (12) vorzugsweise in Abhängigkeit vom Untergrund (25), auf dem das Straßenbaumaterial eingebaut wird, und/oder von der Schichtdicke des Straßenbaumaterials und/oder der Einbaubreite des Straßenbaumaterials kontrolliert und aktiv geregelt wird.

7. Verfahren nach einem der vorhergehenden Ansprüche, **dadurch gekennzeichnet, dass** bei einem sich ändernden, insbesondere verringernden, Reifenluftdruck und/oder bei einer veränderten, insbesondere verringerten, Bohlenentlastung die Geschwindigkeit des Straßenfertigers (10) oder des Beschickers, vorzugsweise automatisch, verändert, insbesondere verringert, wird.

8. Verfahren nach einem der vorhergehenden Ansprüche, **dadurch gekennzeichnet, dass** bei einem Reifenwechsel, insbesondere bei einem Wechsel des Reifenfabrikats, Referenzwerte des Reifenluftdrucks für die Kontrolle und die Regelung der Traktion neu kalibriert werden.

9. Verfahren nach einem der vorhergehenden Ansprüche, **dadurch gekennzeichnet, dass** die aktive Regelung der Traktion der Reifen (15) über zusätzliche Gewichte oder durch mehrteilige Scheibenräder oder durch Luftbefüllung von Reifen (15), die mindestens zwei getrennte Luftkammern aufweisen, durchgeführt wird.

10. Straßenbaumaschine, nämlich Straßenfertiger (10) oder Beschicker, mit einem Fahrwerk (12), das angetriebene Reifen (15) aufweist, **gekennzeichnet durch** eine automatische oder manuell betätigbare Traktionssteuereinrichtung (26) zur aktiven Traktionskontrolle der Reifen (15) mit einer Reifendruckkontrolleinheit, wobei die Traktion der angetriebenen Reifen (15) während des Betriebes der Betriebsart entsprechend durch eine Messung des Reifendrucks anpassbar ist, wobei die Kontrolle und aktive Regelung der Traktion während des Betriebs des Straßenfertigers (10) oder des Beschickers für jeden Reifen (15) unabhängig voneinander automatisch oder manuell vornehmbar ist.

11. Straßenbaumaschine, nämlich Straßenfertiger (10) oder Beschicker, nach Anspruch 10, **dadurch gekennzeichnet, dass** die Traktionssteuereinrichtung (26) mindestens einen Kompressor (27) aufweist mit dem ein Luftkessel (28) mit Druckluft füllbar ist, einen Kesseldruckschalter (29), ein Kesseldruckmanometer (30) sowie ein Vorwahldruckmanometer (32), zum Regeln des Luftdruckes, eine Vorwahleinheit (31), eine Reifendruckkontrolleinheit und eine Regeleinheit (33), Druckluftleitungen (34) sowie Anschlussstellen (35) für die Druckluft an den Reifen (15), wobei der Kompressor (27) vorzugsweise hydraulisch, elektrisch oder mechanisch antreibbar ist oder einen eigenen Antrieb aufweist.

12. Straßenbaumaschine, nämlich Straßenfertiger (10) oder Beschicker, nach Anspruch 10 oder 11, **dadurch gekennzeichnet, dass** die Traktionssteuereinrichtung (26) mindestens einen Sensor zur Ermittlung der Betriebsart und/oder einen Sensor, vorzugsweise einen Sensor für jeden Reifen (15), zur Ermittlung der Traktion, insbesondere des Schlupfes, aufweist.

13. Straßenbaumaschine, nämlich Straßenfertiger (10) oder Beschicker, nach einem der Ansprüche 10 bis 12, **dadurch gekennzeichnet, dass** die Traktion der Reifen (15) über die Traktionssteuereinrichtung (26) durch Veränderung einer Bohlenentlastung einer Einbaubohle (20) regelbar ist.

14. Straßenbaumaschine, nämlich Straßenfertiger (10) oder Beschicker, nach einem der Ansprüche 10 bis 13, **dadurch gekennzeichnet, dass** die Traktionssteuereinrichtung (26) und/oder der Kompressor (27) permanent mit den Reifen (15), insbesondere mit der Reifeninnen- oder außenseite oder der Radnabe, verbunden ist oder dass die Traktionssteuereinrichtung (26) und/oder der Kompressor (27) nicht permanent mit den Reifen (15) verbunden ist.

15. Straßenbaumaschine, nämlich Straßenfertiger (10) oder Beschicker, nach einem der Ansprüche 10 bis 14, **dadurch gekennzeichnet, dass** die Reifen (15) zur Traktionskontrolle Gewichte aufweisen oder dass die Reifen (15) aus einem mehrteiligen Scheibenrad, bestehend aus mindestens einer Radschüssel und einem äußeren Felgenring, aufgebaut sind oder dass die Reifen (15) jeweils zwei getrennte Luftkammern aufweisen.

## Claims

1. A method for operating a self-propelled road construction machine, namely a paver (10) or a feeder for producing a road cover with an undercarriage (12) having driven tires (15), **characterized in that** the traction of the tires (15) of the undercarriage (12) is monitored and actively regulated in dependence on the operating mode of the paver (10) or of the feeder, wherein the monitoring and the active regulating of the traction during the operation of the paver (10) or of the feeder are done automatically or manually and independently of each other for each tire (15) .

2. The method as claimed in claim 1, **characterized in that** the monitoring and the active regulating of the traction during the operation of the paver (10) or of the feeder are done automatically or manually and independently of each other for each rear tire (15), as seen in the production direction (13).

3. The method as claimed in claim 1 or 2, **characterized in that** the active regulating of the traction of the tires (15) is done by changing the tire air pressure, in particular **in that** the tire air pressure is increased during travel on the road or during transport and the tire air pressure is decreased during an installation process of the road cover.

4. The method as claimed in one of the preceding claims, **characterized in that** the active regulating of the traction of the tires (15) is done by changing the load relief on the screed of a paving screed (20) of the paver (10), preferably **in that** the load relief of the paving screed (20) is increased in order to increase the traction.

5. The method as claimed in one of the preceding claims, **characterized in that** the active regulating of the traction of the tires (15) is done by changing the load relief of the screed and by changing the tire air pressure, in particular **in that** the regulating of the traction may be done by the load relief of the screed in addition to a changing of the tire air pressure.

6. The method as claimed in one of the preceding claims, **characterized in that** the tire air pressure is determined, preferably permanently, by a tire pressure monitoring unit for the monitoring and the active regulating of the tire air pressure of all tires (15) during the operation of the paver (10) or of the feeder, in particular **in that** an air pressure loss of the tires (15) is determined by the tire pressure monitoring unit wherein the traction of the tires (15) of the undercarriage (12) is monitored and actively regulated preferably in dependence on the ground base (25) on which the road construction material is being installed, and/or on the thickness of the layer of the road construction material and/or the installation width of the road construction material.

7. The method as claimed in one of the preceding claims, **characterized in that** the speed of the paver (10) or of the feeder is changed, in particular reduced, preferably automatically, in the event of a changing, especially decreasing tire air pressure and/or in the event of a changed, especially decreased screed load relief.

8. The method as claimed in one of the preceding claims, **characterized in that** reference values of the tire air pressure are recalibrated for the monitoring and the regulating of the traction in the event of a change of tires, especially in the event of a change of tire manufacturers.

9. The method as claimed in one of the preceding claims, **characterized in that** the active regulating of the traction of the tires (15) is performed through additional weights or through compound disk wheels or through filling air into tires (15) having at least two separate air chambers.

10. A road construction machine, namely a paver (10) or feeder, having an undercarriage (12) comprising driven tires (15), **characterized by** an automatic or manually activatable traction control device (26) for the active traction control of the tires (15) with a tire pressure monitoring unit, wherein the traction of the driven tires (15) can be adapted accordingly during the running of the operating mode by a measurement of the tire pressure, wherein the monitoring and active regulating of the traction during the operation of the paver (10) or of the feeder can be done automatically or manually and independently of each other for each tire (15)

11. The road construction machine, namely paver (10) or feeder, as claimed in claim 10, **characterized in that** the traction control device (26) has at least one compressor (27) with which an air tank (28) can be filled with compressed air, a tank pressure switch (29), a tank pressure manometer (30) and a preselect pressure manometer (32), for regulating the air pressure, a preselect unit (31), a tire pressure monitoring unit and a regulating unit (33), pressurized air lines (34) as well as connection points (35) for the compressed air on the tires (15), wherein the compressor (27) can be driven preferably hydraulically, electrically or mechanically, or has its own drive.

12. The road construction machine, namely paver (10) or feeder, as claimed in claim 10 or 11, **characterized in that** the traction control device (26) comprises at least one sensor for determining the operating mode and/or one sensor, preferably one sensor for each tire (15), for determining the traction, especially the slippage.

13. The road construction machine, namely paver (10) or feeder, as claimed in one of claims 10 to 12, **characterized in that** the traction of the tires (15) can be regulated through the traction control device (26) by changing a screed load relief of a paving screed (20).

14. The road construction machine, namely paver (10) or feeder, as claimed in one of claims 10 to 13, **characterized in that** the traction control device (26) and/or the compressor (27) are/is permanently connected to the tires (15), especially to the tire inside or outside or the wheel hub, or **in that** the traction control device (26) and/or the compressor (27) are/is not permanently connected to the tires (15).

15. The road construction machine, namely paver (10) or feeder, as claimed in one of claims 10 to 14, **characterized in that** the tires (15) have weights for the traction control or **in that** the tires (15) are composed of a compound disk wheel, consisting of at least one wheel disk and an outer rim ring, or **in that** the tires (15) each have two separate air chambers.

## Revendications

1. Procédé de fonctionnement d'un engin de construction routière automoteur, à savoir un finisseur routier (10) ou un chargeur, destiné à réaliser un revêtement routier et comprenant un mécanisme de roulement (12) comportant des pneumatiques menés (15), **caractérisé en ce que** la traction des pneumatiques (15) du mécanisme de roulement (12) est contrôlée et régulée activement en fonction du mode de fonctionnement du finisseur routier (10) ou du chargeur, le contrôle et la régulation active de la traction pendant le fonctionnement du finisseur routier (10) ou du chargeur pour chaque pneumatique (15) étant effectués automatiquement ou manuellement indépendamment l'un de l'autre.

2. Procédé selon la revendication 1, **caractérisé en ce que** le contrôle et la régulation active de la traction pendant le fonctionnement du finisseur routier (10) ou du chargeur pour chaque pneumatique arrière (15), vu dans le sens de réalisation (13), sont effectués automatiquement ou manuellement indépendamment l'un de l'autre.

3. Procédé selon la revendication 1 ou 2, **caractérisé en ce que** la régulation active de la traction des pneumatiques (15) est effectuée par variation de la pression de l'air dans les pneumatiques, en particulier **en ce que** la pression de l'air dans les pneumatiques est augmentée pendant le déplacement sur route ou le transport et la pression de l'air dans les pneumatiques est réduite pendant un processus de pose du revêtement routier.

4. Procédé selon l'une des revendications précédentes, **caractérisé en ce que** la régulation active de la traction des pneumatiques (15) est effectuée par variation du délestage d'une table de pose (20) du finisseur routier (10), de préférence **en ce que** le délestage de la table de pose (20) est augmenté afin d'augmenter la traction.

5. Procédé selon l'une des revendications précédentes, **caractérisé en ce que** la régulation active de la traction des pneumatiques (15) est effectuée par variation du délestage de la table et par variation de la pression de l'air dans les pneumatiques, en particulier **en ce que** la régulation de la traction est effectuée par délestage de la table en plus de la variation de la pression de l'air dans les pneumatiques.

6. Procédé selon l'une des revendications précédentes, **caractérisé en ce que** pour contrôler et réguler activement la pression de tous les pneumatiques (15) pendant le fonctionnement du finisseur routier (10) ou du chargeur, la pression de l'air dans les pneumatiques est déterminée par une unité de contrôle de pression des pneumatiques, de préférence de manière permanente, en particulier **en ce qu'**une perte de pression d'air dans les pneumatiques (15) étant détectée par l'unité de contrôle de pression des pneumatiques, la traction des pneumatiques (15) du mécanisme de roulement (12) étant contrôlée et régulée activement, de préférence en fonction du sous-sol (25) sur lequel le matériau de construction routière est posé et/ou de l'épaisseur de couche du matériau de construction routière et/ou de la largeur de pose du matériau de construction routière.

7. Procédé selon l'une des revendications précédentes, **caractérisé en ce que** la vitesse du finisseur routier (10) ou du chargeur est modifiée, de préférence automatiquement, en cas de variation, en particulier de réduction, de la pression de l'air dans les pneumatiques et/ou en cas de variation, en particulier de réduction, du délestage de la table.

8. Procédé selon l'une des revendications précédentes, **caractérisé en ce que** lors d'un changement de pneumatique, notamment lors d'un changement de marque de pneumatique, des valeurs de référence de la pression de l'air dans les pneumatiques pour le contrôle et la régulation de la traction sont ré-étalonnées.

9. Procédé selon l'une quelconque des revendications précédentes, **caractérisé en ce que** la régulation active de la traction des pneumatiques (15) est effectuée par des poids supplémentaires ou par des roues à disques en plusieurs parties ou par gonflage des pneumatiques (15) qui comportent au moins deux chambres à air séparées.

10. Engin de construction routière, à savoir finisseur routier (10) ou chargeur, comprenant un mécanisme de roulement (12) qui comporte des pneumatiques menés (15), **caractérisé par** un dispositif de commande de traction (26), à commande automatique ou manuelle, destiné à contrôler activement la traction des pneumatiques (15) avec une unité de contrôle de la pression des pneumatiques, la traction des pneumatiques menés (15) pouvant être adaptée pendant le fonctionnement selon le mode de fonctionnement par mesure de la pression dans les pneumatiques, le contrôle et la régulation active de la traction pendant le fonctionnement du finisseur routier (10) ou du chargeur pour chaque pneumatique (15) pouvant être effectués automatiquement ou manuellement indépendamment l'un de l'autre.

11. Engin de construction routière, à savoir finisseur routier (10) ou chargeur, selon la revendication 10, **caractérisé en ce que** le dispositif de commande de traction (26) comporte au moins un compresseur (27) permettant de remplir un réservoir d'air (28) avec de l'air comprimé, un pressostat de réservoir (29), un manomètre de réservoir (30) et un manomètre de présélection (32) destiné à réguler la pression de l'air, une unité de présélection (31), une unité de contrôle de pression de pneumatique et une unité de régulation (33), des conduites d'air comprimé (34) et des points de raccordement (35) destinés à l'air comprimé sur les pneumatiques (15), le compresseur (27) pouvant de préférence être entraîné hydrauliquement, électriquement ou mécaniquement ou comportant son propre entraînement.

12. Engin de construction routière, à savoir finisseur routier (10) ou chargeur, selon la revendication 10 ou 11, **caractérisé en ce que** le dispositif de commande de traction (26) comporte au moins un capteur destiné à déterminer le mode de fonctionnement et/ou un capteur, de préférence un capteur pour chaque pneumatique (15), destiné à déterminer la traction, notamment le patinage.

13. Engin de construction routière, à savoir finisseur routier (10) ou chargeur, selon l'une des revendications 10 à 12, **caractérisé en ce que** la traction des pneumatiques (15) peut être régulée par le biais du dispositif de commande de traction (26) par variation de délestage d'une table de pose (20).

14. Engin de construction routière, à savoir finisseur routier (10) ou chargeur, selon l'une des revendications 10 à 13, **caractérisé en ce que** le dispositif de commande de traction (26) et/ou le compresseur (27) est relié de manière permanente aux pneumatiques (15), notamment au côté intérieur ou extérieur du pneumatique ou au moyeu de roue, ou **en ce que** le dispositif de commande de traction (26) et/ou le compresseur (27) ne sont pas reliés de manière permanente aux pneumatiques (15).

15. Engin de construction routière, à savoir finisseur routier (10) ou chargeur, selon l'une des revendications 10 à 14, **caractérisé en ce que** les pneumatiques (15) comportent des poids afin de contrôler la traction ou **en ce que** les pneumatiques (15) sont constitués d'une roue pleine en plusieurs partie comprenant au moins une cuvette de roue et d'une jante annulaire extérieure, ou **en ce que** les pneumatiques (15) comportent chacun deux chambres à air séparées.
